# EUROPEAN PATENT APPLICATION

(11) **EP 0 850 702 A2**
(43) Date of publication of application: **01.07.1998**
(21) Application number: 97107950.4
(22) Date of filing: 15.05.1997
(51) Int. Cl.: B21B 27/00, B23K 26/08

(54) **Method for manufacturing engraved rolling roll and apparatus for performing the same**

(30) Priority: 31.12.1996 KR 9681290
(71) Applicant: Korea Institute of Machinery & Materials, Daejeon (KR)
(72) Inventor: Han, You-Hie, Yusong-Ku, Taejon, Korea (KR); Suh, Jeong, Pusanjin-Ku, Pusan, Korea (KR); Lee, Jae-Hoon, Yusong-Ku, Taejon, Korea (KR); Kim, In-Woong, Yusong-Ku, Teajon, Korea (KR); Park, Jeong-Ho, Yusong-Ku, Taejon, Korea (KR); Kim, Jeong-O., Yusong-Ku, Taejon, Korea (KR)
(74) Representative: Lewald, Dietrich, Dipl.-Ing.

(57) **Abstract**

Disclosed is an apparatus for manufacturing an engraved rolling roll (102) comprising a laser beam generator (110) for generating a laser beam, a modulator (120) for intermitting the laser beam, a beam expander (130) for expanding the diameter of the laser beam, a laser beam projecting portion (140) for projecting the laser beam to the surface of a roll (102) to form a pattern thereon, and a roll driving portion (150) for rotating the roll. The pattern projecting process is controlled by a control portion (160) and the pattern projecting process is displayed in real time. Also disclosed is a method for manufacturing an engraved rolling roll comprising the steps of forming a resin layer on the surface of a roll, forming a pattern by projecting the laser beam to the resin layer and engraving the pattern on the surface of the roll. The pattern is formed by projecting of the laser beam to the resin layer and the surface of the roll is engraved to a predetermined depth by a corrosive solution. Various materials of steel sheet, wood, paper, rubber, etc. can be utilized. A continuous and beautiful pattern can be obtained and the work can be carried out in a bright room. The generation of waste water can be restrained.

## Description

The present invention relates to a method for manufacturing a roll for engraving pattern on a steel sheet, and more particularly to a method for manufacturing the roll by utilizing a laser and to an apparatus for manufacturing the roll.

Corrosion-resistant steel sheet, especially a stainless steel sheet has a good corrosion resistance and a beautiful surface and is clean. Accordingly, the steel sheet is used in food containers, in a processing apparatus for the container for foods, and in various architectural equipments. Typical examples of the architectural equipments are an elevator, an escalator, a fence for a veranda, etc. Recently, the stainless steel sheet (called a steel sheet, hereafter) has been used as an external surface of buildings, and the need for the steel sheet is expected to increase from now on. The steel sheet used in food containers and in architectural equipments is a patterned steel sheet which is obtained by engraving the pattern on the surface of the steel sheet in order to enhance the beauty and attain individuality.

Generally, a chemical corrosion method is employed for the manufacturing of the patterned stainless steel sheet (called a patterned steel sheet, hereafter). As an example for the patterned steel sheet manufactured by the chemical corrosion method, a patterned steel sheet for the elevator can be illustrated. Almost all of the patterned steel sheet of a high grade is the patterned steel sheet obtained by the chemical corrosion method. The chemical corrosion method for the patterned steel sheet is as follows.

An acid-resistant resin is coated on the surface of the steel sheet to a predetermined thickness. The pattern is formed while removing the coated resin on the surface of the steel sheet (formation of a pattern). That is, the pattern is exposed to air (when the resin is removed) and a resin layer is formed by the coating of the resin. The resin layer on the surface of the steel sheet is dried for a predetermined time. After the drying, a corrosive, generally an acidic corrosive such as ferric chloride (FeCl₃), is poured onto the pattern of the steel sheet. The depth of the corrosion is generally about a few µm. The steel sheet is washed by a weak base and water and the resin layer is removed to give a desired patterned steel sheet.

However, the chemical corrosion method for the patterned steel sheet requires a lot of manpower and generates poisonous waste water during the manufacturing of the patterned steel sheet. In addition, according to the chemical corrosion method, the steps of the coating of the resin, the formation of the pattern, the corrosion and the washing should be carried out for the manufacturing of each steel sheet. Therefore, as the number of patterned steel sheets increases, the amount of the waste water increases. The waste water becomes a direct factor in the contamination of water.

In order to solve the above-mentioned defect, a method for manufacturing the patterned steel sheet by using an electric discharge is proposed. The electric discharging method is carried out by engraving a relief pattern on the surface of a roll and rolling the steel sheet utilizing the roll having the relief pattern. The surface of the steel sheet is plastic deformed by the relief pattern of the roll, and a steel sheet having an intaglio pattern which is a counter pattern to the relief pattern of the roll can be manufactured. Accordingly, a plurality of patterned steel sheets can be manufactured by using one engraved roll and no waste water is generated during the manufacturing of the patterned steel sheet, which is inevitably generated when using the chemical corrosion method.

However, the corner portions of the pattern engraved in the steel sheet become smooth, so the beauty of the pattern is deteriorated. In addition, a continuous pattern cannot be engraved on the surface of the steel sheet.

In order to solve the defects of the electric charging method, a laser corrosion method which forms the pattern by using a laser and engraves the pattern by the corrosion, is proposed. The laser corrosion method includes the steps of coating a laser (photo) sensitive resin which is hardened by the laser on the surface of the roll to a predetermined thickness, attaching a pattern engraved film (called a patterned film, hereafter) to the resin coating layer, projecting the laser to the patterned film, developing the patterned film, carving the pattern by corroding the developed film attached to the roll using a corrosive solution to obtain the pattern, and removing the resin layer through washing.

However, according to the laser corrosion method, the front end portion and the rear end portion of the patterned film do not agree when the patterned film is attached to the surface of the engraving roll. Due to the disagreement, a space is generated between the front end portion and the rear end portion of the patterned film. This space creates a discontinuous point in the pattern. Even an expert cannot solve the problem concerning the space. In addition, the space of the patterned film is increased in proportion to the length of the roll, and the reproducibility of the pattern is impossible.

Accordingly, it is an object of the present invention to provide a method for manufacturing an engraved rolling roll which can engrave a minute and continuous pattern, can minimize the generation of the contaminating waste water and can engrave various patterns into a plate-shaped material and a circular-shaped material of various quality.

Another object of the present invention is to provide an apparatus for manufacturing the engraved rolling roll which can engrave a minute and continuous pattern, can minimize the generation of the contaminating waste water and can engrave various patterns into a plate-shaped material and a circular-shaped material of various quality.

To accomplish the objects of the present invention, there is provided a method for manufacturing an engraved rolling roll comprising the steps of forming a resin layer on a surface of a roll forming a predetermined pattern on the resin layer by projecting a laser beam onto the resin layer, and engraving the pattern on the surface of the roll.

According to the present invention, the roll is prepared by washing the surface of the roll by using water and drying at the step of forming of the resin layer. On the surface of the prepared roll, a photoresist (a laser sensitive resist) is coated on the surface of the roll to a predetermined thickness, for example scores of µm, to form a resin layer on the surface of the roll.

After the completion of the formation of the resin layer, the step of forming the pattern is carried out. In the step of forming the pattern, the laser beam is projected to the resin layer by prepared data, that is, the pattern. The pattern is created by a computer aided design (CAD) system. The pattern prepared by the CAD system is transported to a laser generating portion for generating the laser beam. The laser beam generated by the laser generating portion is intermitted by a modulator. The diameter of the laser beam passing through the modulator is expanded while passing through a beam expander. It is a reason that a focus of the laser beam being focused after expansion is more microscopic than a focus of the laser beam being directly focused from the laser beam generating portion.

The resin layer is exposed to the laser beam whose diameter is expanded, by a laser beam projecting portion. The laser beam projecting portion projects the pattern to the resin layer of the surface of the roll by the laser beam while moving horizontally along the surface of the roll during the rotation of the roll at high velocity. The roll rotates by a roll driving portion at high velocity, e.g. at about 3000 rpm. One portion of the resin layer exposed to the laser beam is hardened, and an other portion of the resin layer not exposed to the laser beam remains a soft state. The hardened resin layer forms the CAD data, that is, the predetermined pattern. The step of forming the pattern comprises a developing step for forming the predetermined pattern by removing the soft resin layer from the surface of the roll.

After the completion of the forming of the pattern, the step of the engraving the pattern is carried out. In the step of the engraving the pattern, the pattern is engraved on the surface of the roll by corroding the patterned roll by using a corrosive solution. The corrosive solution corrodes the surface of the roll to a predetermined depth, preferably to scores of µm. After the completion of the corrosion of the roll by the corrosive solution, the roll is firstly washed by a weak basic solution, for example, an aqueous sodium hydroxide solution, and then secondly washed by water to remove the hardened resin from the surface of the roll. The roll is dried to complete the pattern engraving process on the surface of the roll.

Another object of the present invention is accomplished by an apparatus for manufacturing an engraved rolling roll comprising a control portion for generating an operating signal, a terminating signal, an outputting signal, a cutoff signal due to the pattern data, a driving signal, a stopping signal and a transporting signal, a laser generating portion for generating a laser beam having a predetermined generating power by receiving the outputting signal from the control portion, the laser generating portion being driven by receiving the operating signal from the control portion, a beam modulator for receiving the cutoff signal from the control portion and intermitting the laser beam generated from the laser generating portion, a beam expander for expanding a diameter of the laser beam passing through the beam modulator, a laser beam exposing portion for receiving the transporting signal and for exposing the surface of the roll to the pattern after collimating the laser beam passing through the beam expander while being transported in a longitudinal direction of the roll, the laser beam projecting portion being positioned at a predetermined distance apart from the surface of the roll, and a driving portion for receiving the driving signal and rotating the roll at a constant velocity.

According to the apparatus for manufacturing the engraved rolling roll of the present invention, the control portion transforms the pattern data into a bit map data and transmits the cutoff signal to the modulator. The modulator intermits the laser beam outputted from the laser generating portion by the cutoff signal. The beam expander expands the diameter of the laser beam by about 2-3 times.

The laser beam projecting portion comprises a projector for focusing and projecting the laser beam to the roll, a reflecting mirror for reflecting the laser beam passing through the beam expander toward the projector, a first sensor positioned behind the reflecting mirror, for detecting a beam reflected at the surface of the roll and generating a modulating signal (MS), a second sensor positioned perpendicularly to the first sensor, for detecting a beam passing through the reflecting mirror from the expander and generating a pattern signal (DS), and a transporting portion for transporting the collimator and the first and the second sensors in the longitudinal direction of the roll.

The roll driving portion comprises a motor for rotating the motor, and an angle sensor attached to the motor for detecting a rotating angle of the motor and generating an angle signal (ANG).

The control portion can display the scanning process of the pattern on the resin layer by receiving the angle signal and the pattern signal and by processing these signals. That is, the scanned pattern on the resin layer of the roll by the projector is displayed in real time, and an error generated during the pattern engraving work can be detected.

The above objects and advantages of the present invention will become more apparent by describing in detail preferred embodiments thereof with reference to the attached drawings in which:
FIG. 1 is a flow chart for explaining a method for manufacturing a roll for engraving a pattern according to the present invention;
FIG. 2 is a block diagram for showing an apparatus for manufacturing a roll for engraving a pattern according to the present invention; and
FIG. 3 is an enlarged view of the exposing portion of the laser beam of FIG. 2.

Hereinafter, the preferred embodiments of the present invention will be explained in more detail with reference to the accompanying drawings. In the drawings, the same marks are given to the same components.

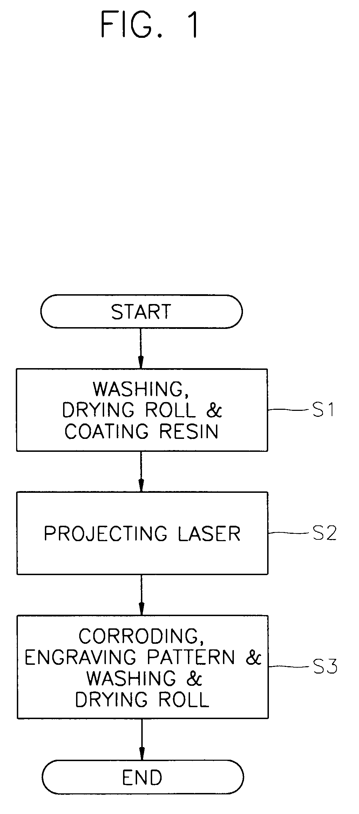

FIG. 1 is a flow chart for explaining a method for manufacturing a roll for engraving a pattern according to the present invention. As shown in FIG. 1, the method for manufacturing the engraved rolling roll for engraving the pattern according to the present invention includes the step of forming a resin layer (step S1), the step of forming the pattern (step S2) and the step of engraving the pattern (step S3).

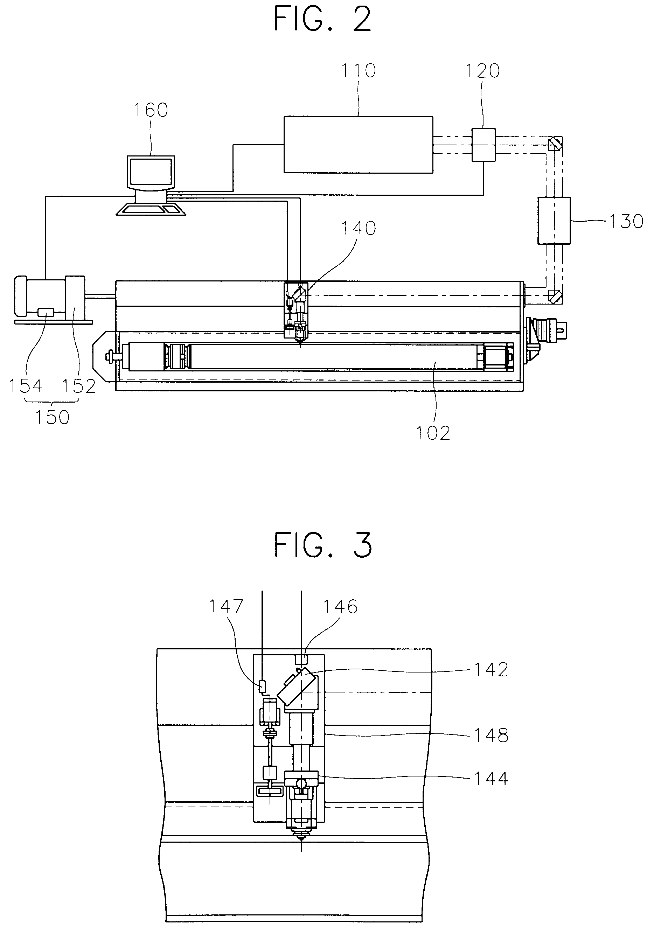

FIG. 2 is a block diagram for showing an apparatus for manufacturing a roll for engraving a pattern according to the present invention and FIG. 3 is an enlarged view of the exposing portion of the laser beam of FIG. 2. In the step of forming the resin layer (step S1), the surface of a roll 102 is washed by water and dried to prepare roll 102. On the surface of prepared roll 102, a photoresist (a laser sensitive resist) is uniformly coated to form a resin layer 104 with a predetermined thickness, e.g. scores of µm.

After the completion of resin layer 104, the step of forming the pattern (step S2) is carried out. The step of forming the pattern (step S2) comprises a step of hardening the pattern of the resin layer 104 by projecting laser to the resin layer 104 and a step of developing the pattern by removing the soft resin layer from the surface of the roll 102 by developing solution.

In the step of forming the pattern (step S2), the laser beam is projected to the resin layer 104 by prepared data, that is, the pattern. At this time, roll 102 rotates at high velocity (about 3000 rpm) and the laser beam moves along the longitudinal direction of roll 102.

The pattern is created by utilizing a CAD system. The pattern prepared by the CAD system is transported to a laser generating portion 110 for generating laser beam 112. The selected wavelength of laser beam 112 is in the ultraviolet region and measures 350nm. Since laser beam 112 of 350nm is used, the resin layer does not react to visible light. Therefore, the work for exposing roll 102 to the pattern (laser beam) need not be carried out in a dark room. Laser beam 112 generated by laser generating portion 110 is intermitted by a modulator 120. The diameter of laser beam 120 passing through modulator 120 is expanded while passing through a beam expander 130. It is a reason that a focus of the laser beam 112 being focused after expansion is more microscopic than a focus of the laser beam 112 being directly focused from the laser beam generating portion 110.

Resin layer 104 is exposed to laser beam 112 of which diameter is expanded by beam expander 130 by a laser beam projecting portion 140. Laser beam projecting portion 140 projects the pattern to the resin layer 104 of the surface of the roll 102 by the laser beam 112 while moving horizontally along the surface of the roll 102 during the rotation of the roll 102 at high velocity. When resin layer 104 is exposed to laser beam 112, resin layer 104 is hardened.

Roll 102 rotates constantly at high velocity, for example, about 3000 rpm, by a roll driving portion 150. One portion of resin layer 104 exposed to laser beam 112 is hardened and an other portion of resin layer 104 not exposed to laser beam 112 remains in a soft state. Hardened resin layer 104 forms the CAD data, that is a predetermined pattern.

During the projecting of the pattern (laser beam) to resin layer 104, a first detecting beam 106 reflected from resin layer 104 of roll 102 and a second detecting beam 108 transported from beam expander 130 are transported to control portion 160, and the process during the projecting of the pattern to resin layer 104 of roll 102 is displayed on a monitor 162. Accordingly, the process of the laser beam projecting portion 104 projecting of the pattern (laser beam) to roll 102 is displayed in real time on monitor 162, and an error generated during the exposing of the pattern can be confirmed.

After the completion of the step of hardening the pattern, the step of developing the pattern is carried out. In the step of developing the pattern, the not-hardened resin layer 104 i.e. the soft resin layer 104 is removed from the surface of the roll 102 by the developing solution. In other words, only the hardened resin layer (pattern) is left on the surface of the roll 102.

After the completion of the step of the forming of the pattern (S2), the step of the engraving of the pattern (step S3) is carried out. At the step of the engraving of the pattern (S3), patterned roll 102 is corroded by using a corrosive solution such as ferric chloride (FeCl₃) to engrave the pattern on the surface of roll 102. At this time, the surface of roll 102 where resin layer 104 is removed is corroded to a depth of scores of µm to engrave the pattern.

The corrosion process is carried out for about a few minutes. After the completion of the corrosion of roll 102 by the corrosive solution, roll 102 is firstly washed by a weak basic liquid such as an aqueous sodium hydroxide solution, and secondly washed by water to completely remove hardened resin layer 104 from the surface of roll 102. The whole process for engraving the pattern on the surface of roll 102 is completed by drying roll 102 whose resin layer is removed.

Using an engraved rolling roll 102 manufactured through the above-mentioned steps (S1, S2 and S3), various patterned metal plates of stainless steel sheet and of aluminum or aluminum alloy can be manufactured. Further, the roll can be utilized for engraving the pattern on solid surfaces such as glass, plastic and wood, and on semi-solid surfaces such as leather, and can be utilized for printing circular-shaped material such as cable and plate-shaped material such as tape and paper.

An apparatus for manufacturing engraved rolling roll 200 according to the present invention includes control portion 160, laser generating portion 110, beam modulator 120 beam expander 130, laser beam projecting portion 140 and roll driving portion 150, as shown in FIG. 2.

Control portion 160 generates an operating signal and a terminating signal for driving and stopping laser generating portion 110, an outputting signal for setting the power of the laser beam outputted by laser generating portion 110, a cutoff signal for intermitting the laser beam generated by laser generating portion 110 according to the pattern data, a driving signal and a stopping signal for driving and stopping roll driving portion 150, and a transporting signal for transporting laser beam projecting portion 140.

Laser generating portion 110 is driven by receiving the operating signal from control portion 160 and generates laser beam 112 having a predetermined power by receiving the outputting signal. Laser beam 112 generated from laser generating portion 110 is intermitted by modulator 120. Modulator 120 intermits laser beam 112 generated from laser generating portion 110 by receiving the cutoff signal from control portion 160. The cutoff signal has been transformed from the pattern data into a bit map data by control portion 160.

The diameter of laser beam 112 which is intermitted by modulator 120 is expanded by beam expander 130. The expanded diameter of laser beam 112 is 2-3 times the diameter of the laser beam outputted from laser generating portion 110.

Laser beam projecting portion 140 is provided with a reflecting mirror 142 for reflecting laser beam 112 outputted from beam expander 130, a projector for focusing laser beam 112 and projecting laser beam 112 to the surface of roll 102, a first sensor 146 positioned behind reflecting mirror 142, for detecting a first detecting beam 114 reflected from the surface of roll 102, a second sensor 147 positioned perpendicular to first sensor 146, for detecting a second detecting beam 116 passing through reflecting mirror 142 from beam expander 130, and a transporting portion 148 for transporting reflecting mirror 142, first and second sensors 146 and 147 and collimator 144 in the longitudinal direction of roll 102.

Laser beam projecting portion 140 receives the transporting signal from control portion 160 and is transported at a constant velocity, e.g. by a constant pitch to project laser beam 112 to the surface of roll 102. After the completion of the projection of laser beam 112 to the surface of roll 102 by laser beam projecting portion 140, resin layer 104 is hardened to form the same shape as the pattern on the surface of roll 102.

First and second sensors 146 and 147 are electrically connected with control portion 160. First sensor 146 detects first detecting beam 114 to generate a modulator signal (MS) and second sensor 147 detects first detecting beam 114 to generate a pattern signal (DS).

Roll driving portion 150 comprises a motor 152 for rotating roll 102 and an angle sensor 154 attached to motor 152 for generating an angle signal (ANG) by detecting the rotating angle of motor 152. Angle sensor 154 is electrically connected with control portion 160.

Control portion 160 receives the angle signal (ANG) and the pattern signal (DS) and treats these signals to display the scanning process of the pattern on resin layer 104. That is, the pattern scanned on resin layer 104 of roll 102 by projector 144 is displayed in real time on monitor 162 and the error generated during the work for engraving the pattern can be confirmed.

As described in the preferred embodiment of the present invention, a continuous and beautiful pattern can be engraved on the surface of the engraved rolling roll and the generation of the waste water during the manufacturing of the roll can be restrained. In addition, the pattern can be continuously reproduced.

Further, the engraved rolling roll manufactured by the present invention can be utilized in metal sheet of stainless steel sheet and of aluminum or aluminum alloy. Further, the roll can be utilized for engraving the pattern on solid surface such as glass, plastic and wood, and an semi-solid such as leather, and can be utilized for printing circular-shaped material such as cable and plate-shaped material such as tape and paper.

Although the preferred embodiment of the invention has been described, it is understood that the present invention should not be limited to the preferred embodiment, but various changes and modifications can be made by one skilled in the art within the scope of the invention as hereinafter claimed.

## Claims

1. A method for manufacturing an engraved rolling roll comprising the steps of:
forming a resin layer on a surface of said roll;
forming a predetermined pattern on said resin layer by projecting a laser beam onto said resin layer; and
engraving the pattern on the surface of said roll

2. A method for manufacturing an engraved rolling roll as claimed in claim 1, wherein said step of forming said resin layer comprises the steps of:
washing the surface of said roll using by and drying the surface thereof; and
coating a photoresist resin of uniform thickness on the surface of said roll.

3. A method for manufacturing an engraved rolling roll as claimed in claim 1, wherein said step of forming the pattern further comprises:
hardening said resin layer with said pattern by projecting the laser beam on said resin layer of the surface of said roll while rotating said roll at a constant velocity and moving said laser beam along a longitudinal direction of said roll at a constant pitch; and
developing said pattern by removing a non-hardened resin layer from the surface of said roll by using a developing solution.

4. A method for manufacturing an engraved rolling roll as claimed in claim 3, wherein said step of engraving said pattern comprises the steps of:
corroding the surface of said roll by a predetermined depth by wetting said resin layer with a corrosive solution;
removing the hardened resin layer by using a weak basic liquid;
washing the surface of said roll; and
drying said surface of said roll.

5. A method for manufacturing an engraved rolling roll as claimed in claim 4, wherein said depth is scores of µm.

6. An apparatus for manufacturing an engraved rolling roll comprising:
a control portion for generating an operating signal, a terminating signal, an outputting signal, a cutoff signal according to pattern data, a driving signal, a stopping signal and a transporting signal;
a laser generating portion for generating a laser beam having a predetermined power by receiving the outputting signal from said control portion, said laser generating portion being driven by the operating signal from said control portion;
a beam modulator for receiving the cutoff signal from said control portion and intermitting said laser beam generated from said laser generating portion;
a beam expander for expanding a diameter of the laser beam passing through said beam modulator:
a laser beam projecting portion for projecting said laser beam to the surface of said roll to form a pattern after focusing said laser beam passing through said beam expander while being transported in a longitudinal direction of said roll by the transporting signal, said laser beam projecting portion being positioned at a predetermined distance apart from the surface of said roll; and
a driving portion for rotating said roll at a constant velocity by receiving the driving signal.

7. An apparatus for manufacturing an engraved rolling roll as claimed in claim 6, wherein said laser beam projecting portion comprises:
a reflecting mirror for reflecting the laser beam outputted from said beam expander;
a projector for focusing said laser beam reflected by said reflecting mirror onto the surface of said roll;
a first sensor for detecting a first detecting beam reflected from the surface of said roll and generating a modulating signal, said first sensor being positioned behind said reflecting mirror;
a second sensor for detecting a second detecting beam passing through said reflecting mirror from said expander and generating a pattern signal, said second sensor being located at a perpendicular position with respect to said first sensor; and
a transporting portion for transporting said collimator and said first and said second sensors in the longitudinal direction of said roll.

8. An apparatus for manufacturing an engraved rolling roll as claimed in claim 6, wherein a wavelength of the laser beam is about 350nm.

9. An apparatus for manufacturing an engraved rolling roll as claimed in claim 6, wherein said beam expander expands a diameter of the laser beam by 2-3 times.

10. An apparatus for manufacturing an engraved rolling roll as claimed in claim 7, wherein said driving portion comprises:
a motor for rotating said roll at a constant velocity; and
an angle sensor for generating an angle signal by detecting a rotating angle of said motor, said angle sensor being attached to said motor.

11. An apparatus for manufacturing an engraved rolling roll as claimed in claim 10, wherein said control portion displays a process of said projecting of the pattern by receiving the pattern signal and the angle signal.
